(19) **Europäisches Patentamt**
**European Patent Office**
**Office européen des brevets**

(11)  **EP 4 124 636 B1**

(12)  **EUROPEAN PATENT SPECIFICATION**

(45) Date of publication and mention
of the grant of the patent:
**08.10.2025   Bulletin 2025/41**

(21) Application number: **21188596.7**

(22) Date of filing: **29.07.2021**

(51) International Patent Classification (IPC):
***C08L 23/12*** *(2006.01)*

(52) Cooperative Patent Classification (CPC):
(C-Sets available)
**C08L 23/12;** C08L 2201/02; C08L 2207/02   (Cont.)

(54) **FLAME RETARDANT COMPOSITION COMPRISING A HIGH MELT STRENGTH POLYPROPYLENE**

FLAMMHEMMENDE ZUSAMMENSETZUNG MIT EINEM POLYPROPYLEN MIT HOHER SCHMELZFESTIGKEIT

COMPOSITION IGNIFUGE COMPRENANT UN POLYPROPYLÈNE À RÉSISTANCE ÉLEVÉE À LA FUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.02.2023   Bulletin 2023/05**

(73) Proprietor: **Borealis GmbH**
**1020 Vienna (AT)**

(72) Inventors:
• **STOCKREITER, Wolfgang**
**4021 Linz (AT)**
• **PELLECCHIA, Roberta**
**4021 Linz (AT)**
• **GITSAS, Antonios**
**4021 Linz (AT)**
• **FRIEDL, Bettina**
**4021 Linz (AT)**
• **SARIOMAA, Pauliina**
**06850 Kulloo (FI)**
• **SCHÜTZ, Florian**
**1220 Wien (AT)**
• **COSTA, Francis**
**4021 Linz (AT)**
• **SAGEDER, Anton**
**4021 Linz (AT)**

(74) Representative: **Maiwald GmbH**
**Elisenhof**
**Elisenstraße 3**
**80335 München (DE)**

(56) References cited:
**EP-A1- 3 255 100      EP-A1- 3 650 517**
**EP-A1- 3 708 636      WO-A1-2021/107540**

(52) Cooperative Patent Classification (CPC): (Cont.)

C-Sets
**C08L 23/12, C08L 23/16, C08K 3/28, C08L 23/12,
C08K 3/28;
C08L 23/12, C08L 23/16, C08K 3/28, C08L 23/12,
C08K 3/28, C08K 3/04**

**Description**

The present invention is related to a flame retardant polypropylene composition (C) comprising a propylene polymer (PP), a nitrogen-containing flame retardant (FR) and an antidripping-agent (A) being a high melt strength polypropylene (HMS-PP) having a $F_{30}$ melt strength determined according to ISO 16790:2005 of at least 20 cN. Further, the present invention is related to the use of a high melt strength polypropylene (HMS-PP) having a $F_{30}$ melt strength determined according to ISO 16790:2005 of at least 20 cN as an antidripping-agent as well as an article comprising the flame retardant polypropylene composition (C).

In electrical applications certain flame retardant requirements are requested. Most commonly UL94 V0 rating at equal or below 1.6 mm specimen thickness has to be achieved. Furthermore, for environmental friendliness halogen-free systems are preferred.

As part of the UL94 rating next to the burning behavior controlled by flame retardant additives there is the dripping behavior to be controlled where for mainly unfilled or low filled polypropylene grades typically polytetrafluoroethylene (PTFE) is used in overall amounts of 0.2 to 0.3 wt.-%. According to regulations, flame retardant materials combined with PTFE are still considered halogen-free, but in practice a small amount of halogen is still present in the formulation. In addition a REACH restriction with the aim of restricting production, placing on the market and use of all per- and polyfluoroalkyl compounds (PFAS) in the EU has been proposed. Thus, fluoropolymers are under consideration for a potential restriction.

Therefore, it is of interest to replace the PTFE in flame retardant polypropylene formulations whereby the above mentioned flame retardant requirement are still met. In other words, it is an object of the present invention to provide a flame retardant polypropylene composition which is free of halogens.

Accordingly, the present invention is directed to a flame retardant polypropylene composition (C), comprising

　　i) 23.0 to 80.0 wt.-% of a propylene polymer (PP),
　　ii) 10.0 to 40.0 wt.-% of a nitrogen-containing flame retardant (FR), and
　　iii) 10.0 to 37.0 wt.-% of an antidripping-agent (A) being a high melt strength polypropylene (HMS-PP) having a $F_{30}$ melt strength determined according to ISO 16790:2005 of at least 20 cN, and
　　iv) 0.0 to 15.0 wt.-% of carbon black (CB),

based on the overall weight of the flame retardant polypropylene composition (C),
wherein the flame retardant polypropylene composition (C) does not contain glass fibers.

According to one embodiment of the present invention, the propylene polymer (PP) is a heterophasic propylene copolymer (HECO) comprising

　　a) a matrix (M) being a polymer of propylene, and
　　b) an elastomer (E) being a copolymer comprising units derived from propylene and ethylene and/or $C_4$ to $C_8$ a-olefin.

The present invention is also directed to a flame retardant polypropylene composition (C), comprising

　　i) a propylene polymer (PP) being a heterophasic propylene copolymer (HECO) comprising

　　　　a) a matrix (M) being a polymer of propylene, and
　　　　b) an elastomer (E) being a copolymer comprising units derived from propylene and ethylene and/or $C_4$ to $C_8$ a-olefin,

　　ii) a nitrogen-containing flame retardant (FR),
　　iii) an antidripping-agent (A) being a high melt strength polypropylene (HMS-PP) having a $F_{30}$ melt strength determined according to ISO 16790:2005 of at least 20 cN, and
　　iv) optionally carbon black (CB).

It is preferred that the flame retardant polypropylene composition (C) comprises

　　i) 20.0 to 65.0 wt.-% of the propylene polymer (PP),
　　ii) 10.0 to 40.0 wt.-% of the nitrogen-containing flame retardant (FR), and
　　iii) 10.0 to 40.0 wt.-% the antidripping-agent (A),
　　iv) 0.0 to 15.0 wt.-% of carbon black (CB),

based on the overall weight of the flame retardant polypropylene composition (C),

According to one embodiment of the present invention, the flame retardant polypropylene composition (C) is free of halogens.

According to another embodiment of the present invention, the overall amounts of the propylene polymer (PP), the nitrogen-containing flame retardant (FR), the antidripping-agent (A) and optionally the carbon black (CB) together make up at least 90 wt.-% of the flame retardant polypropylene composition (C), preferably sum up to 100 wt.-%.

According to a further embodiment of the present invention, the nitrogen-containing flame retardant (FR) comprises a first nitrogen-containing phosphate (FR1) and a second nitrogen-containing phosphate (FR2).

According to still another embodiment of the present invention, the weight ratio between the first nitrogen-containing phosphate (FR1) and the second nitrogen-containing phosphate (FR2) is in the range of 60:40 to 40:60.

It is especially preferred that the first nitrogen-containing phosphate (FR1) is melamine polyphosphate and the second nitrogen-containing phosphate (FR2) is piperazine pyrophosphate.

According to one embodiment of the present invention, the heterophasic propylene copolymer (HECO) has

i) a comonomer content in the range of 4.0 to 17.0 mol-%, preferably in the range of 6.0 to 10.0 mol-%, and/or
ii) a xylene cold soluble fraction (XCS) in the range of 7.0 to 25.0 wt.-%, preferably in the range of 11.0 to 22.0 wt.-%, based on the overall weigh of the heterophasic propylene copolymer (HECO).

According to another embodiment of the present invention, the xylene soluble fraction (XCS) of the heterophasic propylene copolymer (HECO) has

i) a comonomer content in the range of 25.0 to 65.0 mol-%, preferably in the range of 40.0 to 45.0 mol-%, and/or
ii) an intrinsic viscosity (IV) measured according to ISO 1628/1 (at 135 °C in decalin) below 3.5 dl/g, preferably in the range of 2.4 to 3.4 dl/g.

According to a further embodiment of the present invention, the high melt strength polypropylene (HMS-PP) has a melt flow rate $MFR_2$ (230 °C, 2.16 kg) determined according to ISO 1133 in the range of 0.5 to 15.0 g/10 min.

It is especially preferred that the flame retardant polypropylene composition (C) has a melt flow rate $MFR_2$ (230 °C, 2.16 kg) determined according to ISO 1133 in the range of 1.0 to 30.0 g/10 min.

The present invention is further directed to the use of a high melt strength polypropylene (HMS-PP) having a $F_{30}$ melt strength determined according to ISO 16790:2005 of at least 20 cN as an antidripping agent (A) for a composition comprising a propylene polymer (PP) and a nitrogen-containing flame retardant (FR), wherein

a) said composition is free of glass fibers, and/or
b) said propylene polymer (PP) is a heterophasic propylene copolymer (HECO) comprising a matrix (M) being a polymer of propylene, and an elastomer (E) being a copolymer comprising units derived from propylene and ethylene and/or $C_4$ to $C_8$ a-olefin.

The present invention is also directed to an article, comprising the flame retardant polypropylene composition (C) as described above.

In the following, the present invention is described in more detail.

**The flame retardant polypropylene composition (C)**

The flame retardant polypropylene composition (C) according to the present invention comprises a propylene polymer (PP), a nitrogen-containing flame retardant (FR) and an antidripping-agent (A) being a high melt strength polypropylene (HMS-PP) having a $F_{30}$ melt strength determined according to ISO 16790:2005 of at least 20 cN.

According to a preferred embodiment of the present invention, the flame retardant polypropylene composition (C) is free of fluoropolymers. In particular, it is preferred that the flame retardant polypropylene composition (C) does not contain fluoropolymers in amounts exceeding 0.5 wt.-%, more preferably 0.1 wt.-%, still more preferably 0.01 wt.-%, like 0.001 wt.-%. It is especially preferred that no fluoropolymers have been used in the production of the flame retardant polypropylene composition (C).

As used herein, the term "fluoropolymer" refers to a polymeric compound comprising fluorine atoms. Examples for fluoropolymers are poly(tetrafluoro ethylene) (PTFE), tetrafluoroethylene-hexafluoropropylene-copolymer (FEP) and polychlorotrifluoroethylene (PCTFE).

According to another preferred embodiment of the present invention, the flame retardant polypropylene composition (C) is free of halogen atoms. As used herein, the term "halogen" refers to the elements of group 17 of the periodic table. Accordingly, it is preferred that no compounds containing halogen atoms have been used in the production of the flame retardant polypropylene composition (C).

According to one embodiment of the present invention, the flame retardant polypropylene composition (C) is free of glass fibers. In particular, it is preferred that the flame retardant polypropylene composition (C) does not contain glass fibers in amounts exceeding 0.5 wt.-%, more preferably 0.1 wt.-%, still more preferably 0.01 wt.-%, like 0.001 wt.-%. It is especially preferred that no glass fibers have been used in the production of the flame retardant polypropylene composition (C).

According to the embodiment wherein the flame retardant polypropylene composition (C) is free of glass fibers, the flame retardant polypropylene composition (C) comprises

    i) 23.0 to 80.0 wt.-%, more preferably 28.0 to 65.0 wt.-%, still more preferably 30.0 to 55.0 wt.-%, like 35.0 to 50.0 wt.-% of the propylene polymer (PP),
    ii) 10.0 to 40.0 wt.-%, more preferably 12.0 to 35.0 wt.-%, still more preferably 18.0 to 33.0 wt.-%, like 22.0 to 30.0 wt.-% of the nitrogen-containing flame retardant (FR), and
    iii) 10.0 to 37.0 wt.-%, more preferably 12.0 to 36.0 wt.-%, still more preferably 15.0 to 32.0 wt.-%, like 19.0 to 31.0 wt.-% of the antidripping-agent (A),

based on the overall weight of the flame retardant polypropylene composition (C).

It is preferred that the overall amounts of the propylene polymer (PP), the nitrogen-containing flame retardant (FR) and the antidripping-agent (A) together make up at least 90 wt.-% of the flame retardant polypropylene composition (C), more preferably sum up to 100 wt.-%.

According to one embodiment of the present invention, the flame retardant polypropylene composition (C) further comprises carbon black (CB). The flame retardant polypropylene composition (C) according to said embodiment preferably comprises

    i) 23.0 to 65.0 wt.-%, more preferably 28.0 to 60.0 wt.-%, still more preferably 30.0 to 55.0 wt.-%, like 35.0 to 50.0 wt.-% of the propylene polymer (PP),
    ii) 10.0 to 40.0 wt.-%, more preferably 12.0 to 35.0 wt.-%, still more preferably 18.0 to 33.0 wt.-%, like 22.0 to 30.0 wt.-% of the nitrogen-containing flame retardant (FR),
    iii) 10.0 to 37.0 wt.-%, more preferably 12.0 to 36.0 wt.-%, still more preferably 15.0 to 32.0 wt.-%, like 19.0 to 31.0 wt.-% of the antidripping-agent (A), and
    iv) 0.01 to 15.0 wt.-%, more preferably 1.0 to 12.0 wt.-%, still more preferably 2.0 to 11.0 wt.-%, like 3.0 to 10.0 wt.-% of carbon black (CB),

based on the overall weight of the flame retardant polypropylene composition (C).

For embodiments wherein the flame retardant polypropylene composition (C) comprises carbon black (CB), it is preferred that the overall amounts of the propylene polymer (PP), the nitrogen-containing flame retardant (FR), the antidripping-agent (A) and the carbon black (CB) together make up at least 90 wt.-% of the flame retardant polypropylene composition (C), more preferably sum up to 100 wt.-%.

The flame retardant polypropylene composition (C) according to the present invention may further comprise additives (AD) such as acid scavengers, antioxidants, colorants, light stabilizers, slip agents, anti-scratch agents, dispersing agents, processing aids, lubricants, pigments, and the like.

Accordingly, it is preferred that the flame retardant polypropylene composition (C) comprises, more preferably consists of

    i) 23.0 to 64.99 wt.-%, more preferably 28.0 to 60.0 wt.-%, still more preferably 30.0 to 55.0 wt.-%, like 35.0 to 50.0 wt.-% of the propylene polymer (PP),
    ii) 10.0 to 40.0 wt.-%, more preferably 12.0 to 35.0 wt.-%, still more preferably 18.0 to 33.0 wt.-%, like 22.0 to 30.0 wt.-% of the nitrogen-containing flame retardant (FR),
    iii) 10.0 to 37.0 wt.-%, more preferably 12.0 to 36.0 wt.-%, still more preferably 15.0 to 32.0 wt.-%, like 19.0 to 31.0 wt.-% of the antidripping-agent (A),
    iv) 0.01 to 15.0 wt.-%, more preferably 1.0 to 12.0 wt.-%, still more preferably 2.0 to 11.0 wt.-%, like 3.0 to 10.0 wt.-% of carbon black (CB), and
    v) 0.01 to 5.0 wt.-%, more preferably 0.1 to 3.5 wt.-%, still more preferably 0.2 to 2.0 wt.-%, like 0.3 to 1.0 wt.-% of additives (AD),

based on the overall weight of the flame retardant polypropylene composition (C). The additives (AD) are described in more detail below.

For embodiments wherein the flame retardant polypropylene composition (C) comprises additives (AD), it is preferred that the overall amounts of the propylene polymer (PP), the nitrogen-containing flame retardant (FR), the antidripping-agent (A), optionally the carbon black (CB) and the additives (AD) together make up at least 90 wt.-% of the flame retardant polypropylene composition (C), more preferably sum up to 100 wt.-%.

According to another embodiment of the present invention, the propylene polymer (PP) is a heterophasic propylene copolymer (HECO) comprising a matrix (M) being a polymer of propylene, and an elastomer (E) being a copolymer comprising units derived from propylene and ethylene and/or $C_4$ to $C_8$ a-olefin.

For embodiments wherein the propylene polymer (PP) is a heterophasic propylene copolymer (HECO), the flame retardant polypropylene composition (C) comprises

i) 20.0 to 80.0 wt.-%, more preferably 28.0 to 65.0 wt.-%, still more preferably 30.0 to 55.0 wt.-%, like 35.0 to 50.0 wt.-% of the propylene polymer (PP) being a heterophasic propylene copolymer (HECO),
ii) 10.0 to 40.0 wt.-%, more preferably 12.0 to 35.0 wt.-%, still more preferably 18.0 to 33.0 wt.-%, like 22.0 to 30.0 wt.-% of the nitrogen-containing flame retardant (FR), and
iii) 10.0 to 40.0 wt.-%, more preferably 12.0 to 36.0 wt.-%, still more preferably 15.0 to 32.0 wt.-%, like 19.0 to 31.0 wt.-% of the antidripping-agent (A),

based on the overall weight of the flame retardant polypropylene composition (C).

It is preferred that the overall amounts of the propylene polymer (PP) being a heterophasic propylene copolymer (HECO), the nitrogen-containing flame retardant (FR) and the antidripping-agent (A) together make up at least 90 wt.-% of the flame retardant polypropylene composition (C), more preferably sum up to 100 wt.-%.

According to one embodiment of the present invention, the flame retardant polypropylene composition (C) further comprises carbon black (CB). The flame retardant polypropylene composition (C) according to said embodiment preferably comprises

i) 20.0 to 65.0 wt.-%, more preferably 28.0 to 60.0 wt.-%, still more preferably 30.0 to 55.0 wt.-%, like 35.0 to 50.0 wt.-% of the propylene polymer (PP) being a heterophasic propylene copolymer (HECO),
ii) 10.0 to 40.0 wt.-%, more preferably 12.0 to 35.0 wt.-%, still more preferably 18.0 to 33.0 wt.-%, like 22.0 to 30.0 wt.-% of the nitrogen-containing flame retardant (FR),
iii) 10.0 to 40.0 wt.-%, more preferably 12.0 to 36.0 wt.-%, still more preferably 15.0 to 32.0 wt.-%, like 19.0 to 31.0 wt.-% of the antidripping-agent (A), and
iv) 0.01 to 15.0 wt.-%, more preferably 1.0 to 12.0 wt.-%, still more preferably 2.0 to 11.0 wt.-%, like 3.0 to 10.0 wt.-% of carbon black (CB),

based on the overall weight of the flame retardant polypropylene composition (C).

For embodiments wherein the flame retardant polypropylene composition (C) comprises carbon black (CB), it is preferred that the overall amounts of the propylene polymer (PP) being a heterophasic propylene copolymer (HECO), the nitrogen-containing flame retardant (FR), the antidripping-agent (A) and the carbon black (CB) together make up at least 90 wt.-% of the flame retardant polypropylene composition (C), more preferably sum up to 100 wt.-%.

The flame retardant polypropylene composition (C) according to the above embodiment of the present invention may further comprise additives (AD) such as acid scavengers, antioxidants, colorants, light stabilizers, slip agents, anti-scratch agents, dispersing agents, processing aids, lubricants, pigments, and the like.

Accordingly, it is preferred that the flame retardant polypropylene composition (C) comprises, more preferably consists of

i) 20.0 to 64.99 wt.-%, more preferably 28.0 to 60.0 wt.-%, still more preferably 30.0 to 55.0 wt.-%, like 35.0 to 50.0 wt.-% of the propylene polymer (PP) being a heterophasic propylene copolymer (HECO),
ii) 10.0 to 40.0 wt.-%, more preferably 12.0 to 35.0 wt.-%, still more preferably 18.0 to 33.0 wt.-%, like 22.0 to 30.0 wt.-% of the nitrogen-containing flame retardant (FR),
iii) 10.0 to 40.0 wt.-%, more preferably 12.0 to 36.0 wt.-%, still more preferably 15.0 to 32.0 wt.-%, like 19.0 to 31.0 wt.-% of the antidripping-agent (A),
iv) 0.01 to 15.0 wt.-%, more preferably 1.0 to 12.0 wt.-%, still more preferably 2.0 to 11.0 wt.-%, like 3.0 to 10.0 wt.-% of carbon black (CB), and
v) 0.01 to 5.0 wt.-%, more preferably 0.1 to 3.5 wt.-%, still more preferably 0.2 to 2.0 wt.-%, like 0.3 to 1.0 wt.-% of additives (AD),

based on the overall weight of the flame retardant polypropylene composition (C). The additives (AD) are described in more detail below.

For embodiments wherein the flame retardant polypropylene composition (C) comprises additives (AD), it is preferred that the overall amounts of the propylene polymer (PP) being a heterophasic propylene copolymer (HECO), the nitrogen-containing flame retardant (FR), the antidripping-agent (A), optionally the carbon black (CB) and the additives (AD) together make up at least 90 wt.-% of the flame retardant polypropylene composition (C), more preferably sum up to 100 wt.-%.

It is preferred that the flame retardant polypropylene composition (C) according to the present invention has a melt flow rate $MFR_2$ (230 °C, 2.16 kg) determined according to ISO 1133 in the range of 1.0 to 30.0 g/10 min, more preferably in the range of 3.0 to 20.0 g/10 min, still more preferably in the range of 4.0 to 15.0 g/10 min, like in the range of 5.0 to 10.0 g/10 min.

Regarding the mechanical properties, it is preferred that the flame retardant polypropylene composition (C) has a tensile modulus determined according to ISO 527-1A at 23 °C in the range of 1000 to 5000 MPa, more preferably in the range of 1100 to 3000 MPa, still more preferably in the range of 1500 to 2500 MPa, like in the range of 1700 to 2200 MPa.

Additionally or alternatively to the previous paragraph, it is preferred that the flame retardant polypropylene composition (C) has a Charpy notched impact strength determined according to ISO 179 1eA at 23 °C of at least 2.0 $kJ/m^2$, more preferably in the range of 2.0 to 30.0 $kJ/m^2$, still more preferably in the range of 2.2 to 20.0 $kJ/m^2$, like in the range of 2.5 to 10.0 $kJ/m^2$.

Further, it is preferred that the flame retardant polypropylene composition (C) according to the present invention fulfills the requirements of the Standard for Safety of Flammability of Plastic Materials UL 94 V-0 at a thickness of equal or less than 1.6 mm, more preferably equal or less than 1.2 mm, still more preferably equal or less than 1.0 mm, like equal or less than 0.9 mm.

The flame retardant polypropylene composition (C) is preferably obtained by blending, preferably melt-blending the propylene polymer (PP), the nitrogen-containing flame retardant (FR), the antidripping-agent (A) and optionally the carbon black (CB) and the additives (AD).

In the following, the propylene polymer (PP), the nitrogen-containing flame retardant (FR), the antidripping-agent (A) are described in more detail.

### The propylene polymer (PP)

The flame retardant polypropylene composition (C) according to the present invention comprises a propylene polymer (PP). The propylene polymer (PP) can also be a mixture of two or more propylene polymer (PP) components.

The propylene polymer (PP) has a melt flow rate $MFR_2$ (230 °C, 2.16 kg) determined according to ISO 1133 in the range of 5.0 to 300 g/10 min, more preferably in the range of 8.0 to 100 g/10 min, still more preferably in the range of like in the range of 10.0 to 75.0 g/10 min, like in the range of 15.0 to 50.0 g/10 min.

The propylene polymer (PP) can be a homopolymer or copolymer of propylene. Moreover, the propylene polymer (PP) can comprise one or more propylene polymer (PP) components which are different.

In case the propylene polymer (PP) is a copolymer of propylene, it is preferred that the comonomer is selected from ethylene and/or $C_4$ to $C_8$ $\alpha$-olefins. It is especially preferred that the comonomer is ethylene. For propylene polymers (PP) comprising more than one, like two different propylene polymer components which are copolymers of propylene, it is preferred that all propylene polymer components contain the same comonomer, like ethylene.

It is preferred that the propylene polymer (PP) is a copolymer of propylene and ethylene and/or at least another $C_4$ to $C_8$ $\alpha$-olefin.

The propylene polymer (PP) preferably has a comonomer content, like ethylene content, in the range of 2.0 to 25.0 mol-%, more preferably in the range of 4.0 to 20.0 mol-%, still more preferably in the range of 6.0 to 15.0 mol-%, like in the range of 6.2 to 12.0 mol-%.

In a preferred embodiment of this invention, propylene polymer (PP) is a heterophasic propylene copolymer (HECO) comprising

i) a matrix (M) being a polymer of propylene
ii) an elastomer (E) being a copolymer comprising units derived from propylene and ethylene and/or $C_4$ to $C_8$ $\alpha$-olefin.

Generally in the present invention, the expression "heterophasic" indicates that the elastomer is (finely) dispersed in the matrix. In other words the elastomer forms inclusion in the matrix. Thus the matrix contains (finely) dispersed inclusions being not part of the matrix and said inclusions contain the elastomer. The term "inclusion" according to this invention shall preferably indicate that the matrix and the inclusion form different phases within the heterophasic polypropylene, said inclusions are for instance visible by high resolution microscopy, like electron microscopy or scanning force microscopy.

It is appreciated that the propylene polymer (PP) being a heterophasic propylene copolymer (HECO) preferably has a rather low total comonomer content, preferably ethylene content. Thus, it is preferred that the comonomer content of the heterophasic propylene copolymer (HECO) is in the range from 4.0 to 17.0 mol-%, preferably in the range from 5.0 to 14.0 mol-%, more preferably in the range from 6.0 to 10.0 mol-%.

Heterophasic propylene copolymers (HECO) are generally featured by a xylene cold soluble (XCS) fraction and a xylene cold insoluble (XCI) fraction. For the purpose of the present application the xylene cold soluble (XCS) fraction of the heterophasic propylene copolymers (HECO) is essentially identical with the elastomer of said heterophasic propylene copolymers (HECO).

Accordingly when talking about the intrinsic viscosity and the ethylene content of elastomer of the heterophasic propylene copolymers (HECO) the intrinsic viscosity and the ethylene content of the xylene cold soluble (XCS) fraction of said heterophasic propylene copolymers (HECO) is meant.

Accordingly, the matrix (M) content, i.e. the xylene cold insoluble (XCI) content, in the propylene polymer (PP) being a heterophasic propylene copolymer (HECO) is preferably in the range of 75.0 to 93.0 wt%, more preferably in the range of 77.0 to 91.0 wt.-%, like 78.0 to 89.0 wt.-%.

On the other hand the elastomer (E), i.e. the xylene cold soluble (XCS) content, in the propylene polymer (PP) being a heterophasic propylene copolymer (HECO) is preferably in the range of 7.0 to 25.0 wt.-%, more preferably in the range of 9.0 to 23.0 wt.-%, like in the range of 11.0 to 22.0 wt.-%.

The first component of the propylene polymer (PP) as a heterophasic propylene copolymer (HECO) is the matrix (M).

Polypropylenes suitable for use as matrix (M) may include any type of isotactic or predominantly isotactic polypropylene homopolymer or random copolymer known in the art. Thus the polypropylene may be a propylene homopolymer or an isotactic random copolymer of propylene with ethylene and/or C4 to C8 alpha-olefins, such as for example 1-butene, 1-hexene or 1-octene, wherein the total comonomer content ranges from 0.05 to 10 wt.-%.

Further and preferably the polypropylene matrix (M) has a moderate melt flow rate. Accordingly, it is preferred that in the present invention the polypropylene matrix (M), i.e. the xylene cold insoluble (XCI) fraction of the propylene polymer (PP), has a melt flow rate $MFR_2$ (230°C, 2.16 kg) determined according to ISO1133 of in a range of 15.0 to 120 g/10 min, more preferably of 20.0 to 100 g/10 min, still more preferably of 30.0 to 80.0 g/10 min, like in the range of 35.0 to 50.0 g/10 min.

Furthermore, the polypropylene matrix (M) can be multimodal or bimodal in view of the molecular weight.

The expression "multimodal" or "bimodal" used throughout the present invention refers to the modality of the polymer, i.e.

- the form of its molecular weight distribution curve, which is the graph of the molecular weight fraction as a function of its molecular weight,
  and/or
- the form of its comonomer content distribution curve, which is the graph of the comonomer content as a function of the molecular weight of the polymer fractions.

However, it is preferred that the polypropylene matrix (M) is not multimodal or bimodal.

The second component of the propylene polymer (PP) as a heterophasic propylene copolymer (HECO) is the elastomer (E).

The elastomer (E) comprises, preferably consists of, units derivable from (i) propylene and (ii) ethylene and/or at least another C4 to C8 α-olefin, more preferably units derivable from (i) propylene and (ii) ethylene and at least another α-olefin selected form the group consisting of 1-butene, 1-pentene, 1-hexene, 1-heptene and 1-octene. The elastomeric copolymer (E) may additionally contain units derived from a conjugated diene, like butadiene, or a non-conjugated diene, however it is preferred that the elastomeric copolymer consists of units derivable from (i) propylene and (ii) ethylene and/or C4 to C8 α-olefins only. Suitable non-conjugated dienes, if used, include straight-chain and branched-chain acyclic dienes, such as 1,4-hexadiene, 1,5-hexadiene, 1,6-octadiene, 5-methyl-1, 4-hexadiene, 3,7-dimethyl-1,6-octadiene, 3,7-dimethyl-1,7-octadiene, and the mixed isomers of dihydromyrcene and dihydro-ocimene, and single ring alicyclic dienes such as 1,4-cyclohexadiene, 1,5-cyclooctadiene, 1,5-cyclododecadiene, 4-vinyl cyclohexene, 1-allyl-4-isopropylidene cyclohexane, 3-allyl cyclopentene, 4-cyclohexene and 1-isopropenyl-4-(4-butenyl) cyclohexane. Multi-ring alicyclic fused and bridged ring dienes are also suitable including tetrahydroindene, methyltetrahydroindene, dicyclopentadiene, bicyclo (2,2,1) hepta-2,5-diene, 2-methyl bicycloheptadiene, and alkenyl, alkylidene, cycloalkenyl and cycloalkylidene norbornenes, such as 5-methylene-2-norbornene, 5-isopropylidene norbornene, 5-(4-cyclopentenyl)-2-norbornene; and 5-cyclohexylidene-2-norbornene. Preferred non-conjugated dienes are 5-ethylidene-2-norbornene, 1,4-hexadiene and dicyclopentadiene.

Accordingly the elastomer (E) comprises at least units derivable from propylene and ethylene and may comprise other units derivable from a further α-olefin as defined in the previous paragraph. However it is in particular preferred that elastomer (E) comprises units only derivable from propylene and ethylene and optionally a conjugated diene, like butadiene, or a non-conjugated diene as defined in the previous paragraph, like 1,4-hexadiene. Thus an ethylene propylene non-conjugated diene monomer polymer (EPDM) and/or an ethylene propylene rubber (EPR) as elastomer (E) is especially preferred, the latter most preferred.

Like the matrix (M), the elastomer (E) can be unimodal or multimodal, like bimodal. Concerning the definition of unimodal and multimodal, like bimodal, it is referred to the definition above.

In the present invention the content of units derivable from propylene in the elastomer (E) equates with the content of propylene detectable in the xylene cold soluble (XCS) fraction. Accordingly the propylene detectable in the xylene cold soluble (XCS) fraction ranges from 20.0 to 80.0 mol-%, more preferably 35.0 to 70.0 mol-%. The comonomers present in the xylene cold soluble (XCS) fraction are those defined above for the elastomer (E). Thus in a specific embodiment the elastomer (E), i.e. the xylene cold soluble (XCS) fraction, comprises from 25.0 to 65.0 mol-%, more preferably 30.0 to 60.0 mol-%, still more preferably 35.0 to 50.0 mol-%, like 40.0 to 45.0 mol-%, units derivable from at least one of the comonomers defined above for the elastomer (E). Preferably the elastomer (E) is an ethylene propylene non-conjugated diene monomer polymer (EPDM) or an ethylene propylene rubber (EPR), the latter especially preferred, with a propylene and/or ethylene content as defined in this paragraph. In one preferred embodiment the comonomer of the elastomer (E) is ethylene only.

A further preferred requirement of the present invention is that the intrinsic viscosity (IV) of the xylene cold soluble (XCS) fraction of the propylene polymer (PP) being a heterophasic propylene copolymer (HECO) is rather low. Accordingly it is appreciated that the intrinsic viscosity of the xylene cold soluble (XCS) fraction of the propylene polymer (PP) being a heterophasic propylene copolymer (HECO) is below 3.5 dl/g, more preferably not more than 3.4 dl/g. Even more preferred, the intrinsic viscosity of the xylene cold soluble (XCS) fraction of the propylene polymer (PP) being a heterophasic propylene copolymer (HECO) is in the range of 1.8 to below 3.5 dl/g, more preferably in the range 1.9 to 3.4 dl/g, like 2.0 to 3.4 dl/g. The intrinsic viscosity is measured according to ISO 1628 in decalin at 135 °C.

Preferably, the propylene content of the propylene polymer (PP) is 85.0 to 96.0 wt.-%, more preferably 88.0 to 94.0 wt.-%, based on total weight of propylene polymer (PP), more preferably based the amount of the matrix (M) and the elastomeric copolymer (E) together, in case that the propylene polymer (PP) is a heterophasic propylene copolymer (HECO) as defined above.

The propylene polymer (PP) being a heterophasic propylene copolymer (HECO) can be produced by blending the matrix (M) and the elastomer (E). However, it is preferred that the heterophasic propylene copolymer (HECO) is produced in a sequential step process, using reactors in serial configuration and operating at different reaction conditions. As a consequence, each fraction prepared in a specific reactor may have its own molecular weight distribution and/or comonomer content distribution.

The propylene polymer (PP) being a heterophasic propylene copolymer (HECO) according to this invention is preferably produced in a sequential polymerization process, i.e. in a multistage process, known in the art, wherein the (semi)crystalline propylene polymer (M) is produced at least in one slurry reactor, preferably in a slurry reactor and optionally in a subsequent gas phase reactor, and subsequently the elastomer (E) is produced at least in one, i.e. one or two, gas phase reactor(s).

Accordingly it is preferred that the propylene polymer (PP) being a heterophasic propylene copolymer (HECO) is produced in a sequential polymerization process comprising the steps of

(a) polymerizing propylene and optionally at least one ethylene and/or $C_4$ to $C_8$ $\alpha$-olefin in a first reactor (R1) obtaining the first polypropylene fraction of the matrix (M), preferably said first polypropylene fraction is a propylene homopolymer,
(b) optionally transferring the first polypropylene fraction into a second reactor (R2),
(c) optionally polymerizing in the second reactor (R2) and in the presence of said first polypropylene fraction propylene and optionally at least one ethylene and/or $C_4$ to $C_8$ $\alpha$-olefin obtaining thereby a second polypropylene fraction, preferably said second polypropylene fraction is a second propylene homopolymer, said first polypropylene fraction and optionally said second polypropylene fraction form the matrix (M), i.e. the matrix of the heterophasic propylene copolymer (HECO),
(d) transferring the matrix (M) of step (c) into a third reactor (R3),
(e) polymerizing in the third reactor (R3) and in the presence of the matrix (M) obtained in step (a) or (c) propylene and ethylene to obtain the elastomer (E) dispersed in the matrix (M), the matrix (M) and the elastomer (E) form the propylene polymer (PP) being a heterophasic propylene copolymer (HECO).

It is preferred that the propylene polymer (PP) being a heterophasic propylene copolymer (HECO) is prepared in the presence of

(a) a Ziegler-Natta catalyst comprising compounds (TC) of a transition metal of Group 4 to 6 of IUPAC, a Group 2 metal compound (MC) and an internal donor (ID);
(b) optionally a co-catalyst (Co), and
(c) optionally an external donor (ED).

This Ziegler-Natta catalyst can be any stereospecific Ziegler-Natta catalyst for propylene polymerization, which preferably is capable of catalyzing the polymerization and copolymerization of propylene and optional comonomers at a pressure of 500 to 10000 kPa, in particular 2500 to 8000 kPa, and at a temperature of 40 to 110°C, in particular of 60 to 110°C.

Preferably, the Ziegler-Natta catalyst comprises a high-yield Ziegler-Natta type catalyst including an internal donor component, which can be used at high polymerization temperatures of 80°C or more. Such high-yield Ziegler-Natta catalyst can comprise a succinate, a diether, a citraconate, a phthalate etc., or mixtures therefrom as internal donor (ID). Preferably, the internal donor (ID) is free of phthalate compounds.

According to one preferred embodiment of the present invention, the propylene polymer (PP) consists of the heterophasic propylene copolymer (HECO).

In another embodiment, the propylene polymer (PP) comprises the heterophasic propylene copolymer (HECO) and one or more further homo- or copolymers of propylene such as further heterophasic propylene copolymers. In case the propylene polymer (PP) comprises further copolymers of propylene such as further heterophasic propylene copolymers, it is preferred that the heterophasic propylene copolymer (HECO) and the further copolymers of propylene contain the same comonomer, preferably ethylene.

### The flame retardant composition (FR)

The polypropylene composition (C) according to the present invention comprises a nitrogen-containing flame retardant (FR).

According to a preferred embodiment of the present invention, the nitrogen-containing flame retardant (FR) is free of halogens. In other words, it is preferred that the nitrogen-containing flame retardant (FR) does not contain any organic or inorganic compounds containing halogen atoms. As used herein, the term "halogen" refers to the elements of group 17 of the periodic table.

It is preferred that the nitrogen-containing flame retardant (FR) comprises at least one nitrogen-containing phosphate, preferably at least one organic nitrogen-containing phosphate. Preferably, said organic nitrogen-containing phosphate is a phosphate of heterocyclic $C_3$-$C_6$-, more preferably $C_3$-$C_4$-alkyl or -aryl compounds comprising at least one N-atom.

According to a preferred embodiment of the present invention, the nitrogen-containing flame retardant (FR) comprises a first nitrogen-containing phosphate (FR1) and a second nitrogen-containing phosphate (FR2) different from the first nitrogen-containing phosphate (FR1).

Preferably, the first nitrogen-containing phosphate (FR1) and the second nitrogen-containing phosphate (FR2) are organic nitrogen-containing phosphates. It is especially preferred that the first nitrogen-containing phosphate (FR1) and the second nitrogen-containing phosphate (FR2) are phosphates of heterocyclic $C_3$-$C_6$-, more preferably $C_3$-$C_4$-alkyl or -aryl compounds comprising at least one N-atom.

It is preferred that the first nitrogen-containing phosphate (FR1) is an organic nitrogen-containing polyphosphate. More preferably, the first nitrogen-containing phosphate (FR1) is a polyphosphate of a heterocyclic $C_3$-$C_6$-, more preferably $C_3$-$C_4$-aryl compound comprising at least one N-atom. It is especially preferred that the first nitrogen-containing phosphate (FR1) is melamine polyphosphate.

It is preferred that the second nitrogen-containing phosphate (FR2) is an organic nitrogen-containing diphosphate. More preferably, the second nitrogen-containing phosphate (FR2) is a diphosphate of a heterocyclic $C_3$-$C_6$-, more preferably $C_3$-$C_4$-alkyl compound comprising at least one N-atom, like two N-atoms. It is especially preferred that the second nitrogen-containing phosphate (FR2) is piperazine pyrophosphate.

According to a preferred embodiment of the present invention, the weight ratio between the first nitrogen-containing phosphate (FR1) and the second nitrogen-containing phosphate (FR2) is in the range of 60:40 to 40:60.

Suitable nitrogen-containing flame retardants (FR) are preferably commercially available. A highly suitable example of a commercial nitrogen-containing flame retardant (FR) is the flame retardant product sold under the trade name Phlamoon-1090A, produced and supplied by SULI.

The amount of the nitrogen-containing flame retardant (FR) means herein the amount based on the overall weight of the polypropylene composition (C) of the nitrogen-containing flame retardant (FR) as supplied by the producer thereof. Accordingly, the nitrogen-containing flame retardant (FR) may contain further components in minor amounts, like additives, flame retardant synergists and/or carrier medium. Thus it is to be understood that such further components are calculated to the amount of the nitrogen-containing flame retardant (FR).

### The antidripping-agent (A)

The inventive polypropylene composition (C) further comprises an antidripping-agent (A).

As used herein, the term "antidripping-agent" refers to an additive that prevents or reduces the effect of dripping of a polymeric material under UL94 test conditions. During the UL94 test, it needs to be observed whether or not the specimen drips and, if any, whether the drops are flaming. The rating of a polymeric product in the UL94 vertical burning test depends on the burning time and the dripping phenomena. The burning time after removal of the ignition source determines whether the polymer is V0, V1, or no grade (fail). The dripping phenomena discriminate between the V2 grade and the V1 grade. If the flaming material drips and ignites the cotton placed under the test specimen, the grade of the polymeric product will be rated as V2. Clearly, the dripping phenomena are important to the UL94 vertical test (see Y. Wang et al., Journal of Fire Sciences 2012, 30(6), 477-501).

According to a preferred embodiment of the present invention, the antidripping-agent (A) is free of halogens. In other words, it is preferred that the antidripping-agent (A) does not contain any organic or inorganic compounds containing halogen atoms. As used herein, the term "halogen" refers to the elements of group 17 of the periodic table.

The anidripping-agent (A) according to the present invention is a high melt strength polypropylene (HMS-PP) having a $F_{30}$ melt strength determined according to ISO 16790:2005 of at least 20 cN.

A high melt strength polypropylene is branched and, thus, differs from a linear polypropylene in that the polypropylene backbone covers side chains whereas a non-branched polypropylene, i.e. a linear polypropylene, does not cover side chains. The side chains have significant impact on the rheology of the polypropylene. Accordingly, linear polypropylenes and high melt strength polypropylenes can be clearly distinguished by their flow behavior under stress.

Branching can be achieved by using specific catalysts, i.e. specific single-site catalysts, or by chemical modification. Concerning the preparation of a branched polypropylene obtained by the use of a specific catalyst reference is made to EP 1 892 264. With regard to a branched polypropylene obtained by chemical modification it is referred to EP 0 879 830 A1. In such a case the branched polypropylene is also called high melt strength polypropylene.

The branching index g' defines the degree of branching and correlates with the amount of branches of a polymer. Preferably, the high melt strength polypropylene (HMS-PP) has a branching index g' determined according to GPC equal or below 0.95, more preferably equal or below 0.9, still more preferably equal or below 0.85, like equal or below 0.8.

The high melt strength polypropylene (HMS-PP), as the major component of the polypropylene composition has a $F_{30}$ melt strength of at least 20 cN and a $v_{30}$ melt extensibility of more than 200 mm/s, preferably has a $F_{30}$ melt strength of 20 to 50 cN and a $v_{30}$ melt extensibility of more than 200 to 300 mm/s. The $F_{30}$ melt strength and the $v_{30}$ melt extensibility are measured according to ISO 16790:2005.

Additionally, the high melt strength polypropylene (HMS-PP) can be further defined by the strain hardening factor (SHF). Accordingly it is preferred that the high melt strength polypropylene (HMS-PP), has a strain hardening factor (SHF) of at least 1.7, more preferably of at least 1.9, yet more preferably in the range of 1.9 to 7.0, still more preferably in the range of 1.9 to 6.5 measured at a strain rate of 3.0 s$^{-1}$ and a Hencky strain of 2.5.

Further it is preferred that the high melt strength polypropylene (HMS-PP), has a melt flow rate MFR$_2$ (230 °C, 2.16 kg) measured according to ISO 1133 of at in a range of 0.5 to 15.0 g/10 min, still more preferably in a range of 1.0 to 10.0 g/10 min, like in the range of 1.8 to 3.0 g/10 min.

Preferably, the high melt strength polypropylene (HMS-PP), has a melting point of at least 130°C, more preferably of at least 135°C and most preferably of at least 140°C. The crystallization temperature is preferably at least 120°C.

Further, the high melt strength polypropylene (HMS-PP), can be a high melt strength random propylene copolymer (R-HMS-PP), or a high melt strength propylene homopolymer (H-HMS-PP), the latter being preferred.

For the purpose of the present invention, the expression "propylene homopolymer" refers to a polypropylene that consists substantially, i.e. of at least 97 mol-%, preferably of at least 98 mol-%, more preferably of at least 99 mol-%, most preferably of at least 99.8 mol-% of propylene units. In a preferred embodiment only propylene units in the propylene homopolymer are detectable.

In case the high melt strength polypropylene (HMS-PP), is a high melt strength random propylene copolymer (R-HMS-PP), it comprises monomers copolymerizable with propylene, for example comonomers such as ethylene and/or $C_4$ to $C_{12}$ $\alpha$-olefins, in particular ethylene and/or $C_4$ to $C_{10}$ $\alpha$-olefins, e.g. 1-butene and/or 1-hexene. Preferably the high melt strength random propylene copolymer (R-HMS-PP), comprises, especially consists of, monomers copolymerizable with propylene from the group consisting of ethylene, 1-butene and 1-hexene. More specifically the high melt strength random propylene copolymer (R-HMS-PP), comprises - apart from propylene - units derivable from ethylene and/or 1-butene. In a preferred embodiment the high melt strength random propylene copolymer (R-HMS-PP), comprises units derivable from ethylene and propylene only. The comonomer content in the high melt strength random propylene copolymer (R-HMS-PP), is preferably in the range of more than 0.2 to 10.0 mol-%, still more preferably in the range of more than 0.5 to 7.0 mol-%.

In this regard it is to mention that the high melt strength polypropylene (HMS-PP) being either a high melt strength propylene homopolymer (H-HMS-PP) or a high melt strength random propylene copolymer (R-HMS-PP) may comprise additionally unsaturated monomers different to the comonomers defined for the high melt strength random propylene copolymer (R-HMS-PP). In other words the high melt strength propylene homopolymer (H-HMS-PP) or the high melt strength random propylene copolymer (R-HMS-PP) may comprise unsaturated monomers, like bifunctionally unsaturated monomer(s) and/or multifunctionally unsaturated low molecular weight polymer(s) as defined in detail below, being different to propylene, ethylene and other $C_4$ to $C_{12}$ $\alpha$-olefins. Accordingly the definition of homopolymer and copolymer in view of the high melt strength polypropylene (HMS-PP) refers actually to the unmodified polypropylene used to obtain the melt strength polypropylene (HMS-PP) by chemical modification as defined in detail below.

As mentioned, the high melt strength polypropylene (HMS-PP) is a modified polypropylene. Accordingly the high melt strength polypropylene (HMS-PP) can be further defined by the way obtained. The high melt strength polypropylene (HMS-PP) is preferably the result of treating an unmodified polypropylene with thermally decomposing radical-forming agents and/or with ionizing radiation. However in such a case a high risk exists that the unmodified polypropylene is degraded, which is detrimental. Thus it is preferred that the modification is accomplished by the use of bifunctionally unsaturated monomer(s) and/or multifunctionally unsaturated low molecular weight polymer(s) as chemically bound bridging unit(s). A suitable method to obtain the high melt strength polypropylene (HMS-PP) is for instance disclosed in EP 0 787 750, EP 0 879 830 A1 and EP 0 890 612 A2. Thereby, the amount of peroxide is preferably in the range of 0.05 to 3.00 wt.-% based on the unmodified polypropylene.

Accordingly in one preferred embodiment the high melt strength polypropylene (HMS-PP) comprises

(a) if it is a high melt strength propylene homopolymer (H-HMS-PP) units derived from

(i) propylene and
(ii) bifunctionally unsaturated monomer(s) and/or multifunctionally unsaturated low molecular weight polymer(s),

or

(b) if it is a high melt strength random propylene copolymer (R-HMS-PP) units derived from

(i) propylene
(ii) ethylene and/or $C_4$ to $C_{10}$ $\alpha$-olefins, e.g. 1-butene and/or 1-hexene, preferably erthylene, and
(iii) bifunctionally unsaturated monomer(s) and/or multifunctionally unsaturated low molecular weight polymer(s).

"Bifunctionally unsaturated or multifunctionally unsaturated" as used above means preferably the presence of two or more non-aromatic double bonds, as in e.g. divinylbenzene or cyclopentadiene or polybutadiene. Only such bi- or multifunctionally unsaturated compounds are used which can be polymerized preferably with the aid of free radicals. The unsaturated sites in the bi- or multifunctionally unsaturated compounds are in their chemically bound state not actually "unsaturated", because the double bonds are each used for a covalent bond to the polymer chains of the unmodified polypropylene.

Reaction of the bifunctionally unsaturated monomer(s) and/or multifunctionally unsaturated low molecular weight polymer(s), preferably having a number average molecular weight ($M_n$) $\leq$ 10000 g/mol, synthesized from one and/or more unsaturated monomers with the unmodified polypropylene may be performed in the presence of a thermally free radical forming agent, e.g. decomposing free radical-forming agent, like a thermally decomposable peroxide and/or ionizing radiation or microwave radiation.

The bifunctionally unsaturated monomers may be

- divinyl compounds, such as divinylaniline, m-divinylbenzene, p-divinylbenzene, divinylpentane and divinylpropane;
- allyl compounds, such as allyl acrylate, allyl methacrylate, allyl methyl maleate and allyl vinyl ether;
- dienes, such as 1,3-butadiene, chloroprene, cyclohexadiene, cyclopentadiene, 2,3-dimethylbutadiene, heptadiene, hexadiene, isoprene and 1,4-pentadiene;
- aromatic and/or aliphatic bis (maleimide) bis (citraconimide) and mixtures of these unsaturated monomers.

Especially preferred bifunctionally unsaturated monomers are 1,3-butadiene, isoprene, dimethyl butadiene and divinylbenzene.

The multifunctionally unsaturated low molecular weight polymer, preferably having a number average molecular weight ($M_n$) $\leq$ 10000 g/mol may be synthesized from one or more unsaturated monomers.

Examples of such low molecular weight polymers are

- polybutadienes, especially where the different microstructures in the polymer chain, i.e. 1,4-cis, 1,4-trans and 1,2-(vinyl) are predominantly in the 1,2-(vinyl) configuration
- copolymers of butadiene and styrene having 1,2- (vinyl) in the polymer chain.

A preferred low molecular weight polymer is polybutadiene, in particular a polybutadiene having more than 50.0 wt.-% of the butadiene in the 1,2-(vinyl) configuration.

The high melt strength polypropylene (HMS-PP) may contain more than one bifunctionally unsaturated monomer and/or multifunctionally unsaturated low molecular weight polymer. Even more preferred the amount of bifunctionally unsaturated monomer(s) and multifunctionally unsaturated low molecular weight polymer(s) together in the high melt strength polypropylene (HMS-PP) 0.01 to 10.0 wt.-% based on said high melt strength polypropylene (HMS-PP).

As stated above it is preferred that the bifunctionally unsaturated monomer(s) and/or multifunctionally unsaturated low molecular weight polymer(s) are used in the presence of a thermally decomposing free radical-forming agent.

Peroxides are preferred thermally decomposing free radical-forming agents. More preferably the thermally decomposing free radical-forming agents are selected from the group consisting of acyl peroxide, alkyl peroxide, hydroperoxide, perester and peroxycarbonate.

The following listed peroxides are in particular preferred:

Acyl peroxides: benzoyl peroxide, 4-chlorobenzoyl peroxide, 3-methoxybenzoyl peroxide and/or methyl benzoyl peroxide.

Alkyl peroxides: allyl t-butyl peroxide, 2,2-bis(t-butylperoxybutane), 1,1-bis(t-butylperoxy)-3,3,5-trimethylcyclohexane, n-butyl-4,4-bis(t-butylperoxy) valerate, diisopropylaminomethyl-t-amyl peroxide, dimethylaminomethyl-t-amyl peroxide, diethylaminomethyl-t-butyl peroxide, dimethylaminomethyl-t-butyl peroxide, 1,1-di-(t-amylperoxy)cyclohexane, t-amyl peroxide, t-butylcumyl peroxide, t-butyl peroxide and/or 1-hydroxybutyl n-butyl peroxide.

Peresters and peroxy carbonates: butyl peracetate, cumyl peracetate, cumyl perpropionate, cyclohexyl peracetate, di-t-butyl peradipate, di-t-butyl perazelate, di-t-butyl perglutarate, di-t-butyl perthalate, di-t-butyl persebacate, 4-nitrocumyl perpropionate, 1-phenylethyl perbenzoate, phenylethyl nitro-perbenzoate, t-butylbicyclo-(2,2,1)heptane percarboxylate, t-butyl-4-carbomethoxy perbutyrate, t-butylcyclobutane percarboxylate, t-butylcyclohexyl peroxycarboxylate, t-butylcyclopentyl percarboxylate, t-butylcyclopropane percarboxylate, t-butyldimethyl percinnamate, t-butyl-2-(2,2-diphenylvinyl) perbenzoate, t-butyl-4-methoxy perbenzoate, t-butylperbenzoate, t-butylcarboxycyclohexane, t-butyl pernaphthoate, t-butyl peroxyisopropylcarbonate, t-butyl pertoluate, t-butyl-1-phenylcyclopropyl percarboxylate, t-butyl-2-propylperpentene-2-oate, t-butyl-1-methylcyclopropyl percarboxylate, t-butyl-4-nitrophenyl peracetate, t-butylnitrophenyl peroxycarbamate, t-butyl-N-succiimido percarboxylate, t-butyl percrotonate, t-butyl permaleic acid, t-butyl permethacrylate, t-butyl peroctoate, t-butyl peroxyisopropylcarbonate, t-butyl perisobutyrate, t-butyl peracrylate and/or t-butyl perpropionate.

Also contemplated are mixtures of these above listed free radical-forming agents.

Preferably the unmodified polypropylene is a propylene homopolymer.

After the preparation the high melt strength polypropylene (HMS-PP) may be subjected to modification steps to further modify the polymer. Such modification steps include, for instance, grafting, where one or more functional comonomers are grafted to the polypropylene chain; and visbreaking, where the molecular weight of the polypropylene is reduced by combining the polymer in molten state in the extruder with a free radical generator, such as a peroxide. Such steps are well known to the person skilled in the art and references to them may be found in the literature.

**The additives (AD)**

In addition to the propylene copolymer (PP), the nitrogen-containing flame retardant (FR), and the antidripping-agent (A), the polypropylene composition (C) of the invention may include additives (AD). Typical additives are acid scavengers, antioxidants, colorants, light stabilizers, slip agents, anti-scratch agents, dispersing agents, processing aids, lubricants, pigments, and the like.

The content of additives in the polypropylene composition (C) of the invention will normally not exceed 5.0 wt.-%, preferably being in the range of 0.01 to 5.0 wt.-%, more preferably 0.1 to 3.5 wt.-%, still more preferably 0.2 to 2.0 wt.-%, like 0.3 to 1.0 wt.-%.

Such additives are commercially available and for example described in "Plastic Additives Handbook", 6th edition 2009 of Hans Zweifel (pages 1141 to 1190).

Furthermore, the term "additives (AD)" according to the present invention also includes carrier materials, in particular polymeric carrier materials.

**The Polymeric Carrier Material**

Preferably the flame retardant polypropylene composition (C) of the invention does not comprise (a) further polymer (s) different to the propylene polymer (PP) and the high melt strength polypropylene (HMS-PP) in an amount exceeding 5.0 wt.-%, preferably in an amount exceeding 3.0 wt.-%, more preferably in an amount exceeding 2.0 wt.-%, based on the weight of the flame retardant polypropylene composition (C). Any polymer being a carrier material for additives (AD) is not calculated to the amount of polymeric compounds as indicated in the present invention, but to the amount of the respective additive.

The polymeric carrier material of the additives (AD) is a carrier polymer to ensure a uniform distribution in the flame retardant polypropylene composition (C) of the invention. The polymeric carrier material is not limited to a particular polymer. The polymeric carrier material may be ethylene homopolymer, ethylene copolymer obtained from ethylene and $\alpha$-olefin comonomer such as C3 to C8 $\alpha$-olefin comonomer, propylene homopolymer and/or propylene copolymer obtained from propylene and $\alpha$-olefin comonomer such as ethylene and/or C4 to C8 $\alpha$-olefin comonomer. It is preferred that the polymeric carrier material does not contain monomeric units derivable from styrene or derivatives thereof.

**The use**

The present invention is further directed to the use of a high melt strength polypropylene (HMS-PP) having a $F_{30}$ melt strength determined according to ISO 16790:2005 of at least 20 cN as an antidripping agent (A) for a composition comprising a propylene polymer (PP) and a nitrogen-containing flame retardant (FR), wherein said composition is free of glass fibers and/or said propylene polymer (PP) is a heterophasic propylene copolymer (HECO) comprising a matrix (M) being a polymer of propylene, and an elastomer (E) being a copolymer comprising units derived from propylene and ethylene and/or $C_4$ to $C_8$ a-olefin.

Regarding the propylene polymer (PP), the heterophasic propylene copolymer (HECO), the high melt strength polypropylene (HMS-PP) and the nitrogen-containing flame retardant (FR), reference is made to the definitions provided above.

**The article**

The present invention also relates to an article comprising the flame retardant polypropylene composition (C) as defined above. The present invention in particular relates to an article comprising at least 60 wt.-%, more preferably at least 80 wt.-%, still more preferably at least 90 wt.-%, like at least 95 wt.-% or at least 99 wt.-%, of the flame retardant polypropylene composition (C) as defined above. In an especially preferred embodiment the present invention relates to an article consisting of the flame retardant polypropylene composition (C) as defined above.

Preferably, the article is an automotive article in the field of electronic components such as an electric cable insulation, housings of electric devices, containers and parts of power electronic components of automobile parts and home electric appliance parts, and the like.

The present invention will now be described in further detail by the examples provided below.

**EXAMPLES**

**A. Measuring methods**

The following definitions of terms and determination methods apply for the above general description of the invention as well as to the below examples unless otherwise defined. $MFR_2$ **(230 °C)** is measured according to ISO 1133 (230 °C, 2.16 kg load).

**Quantification of microstructure by NMR spectroscopy**

Quantitative nuclear-magnetic resonance (NMR) spectroscopy was used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimized 10 mm extended temperature probehead at 125°C using nitrogen gas for all pneumatics. Approximately 200 mg of material was dissolved in 3 ml of *1,2*-tetrachloroethane-d_2 (TCE-$d_2$) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm] \% = 100 * ( \, mmmm \, / \, \text{sum of all pentads} \, )$$

The presence of 2,1 erythro regio defects was indicated by the presence of the two methyl sites at 17.7 and 17.2 ppm and confirmed by other characteristic sites.

Characteristic signals corresponding to other types of regio defects were not observed (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.7 and 17.2 ppm:

$$P_{21e} = ( I_{e6} + I_{e8} ) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e] \, mol\% = 100 * ( P_{21e} / P_{total} )$$

For copolymers characteristic signals corresponding to the incorporation of ethylene were observed (Cheng, H. N., Macromolecules 17 (1984), 1950).

With regio defects also observed (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) correction for the influence of such defects on the comonomer content was required.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**Intrinsic viscosity (IV)** of propylene homopolymers and copolymers is measured according to DIN ISO 1628/1, October 1999 (in Decalin at 135 °C).

**The xylene cold solubles (XCS, wt.-%):** Content of xylene cold solubles (XCS) was determined at 25 °C according ISO 16152; first edition; 2005-07-01.

**Charpy notched impact strength** was determined according to ISO 179-1 /1eA at 23 °C and -30 °C by using injection moulded test specimens (80 x 10 x 4 mm) prepared according to EN ISO 1873-2.

**Tensile properties** were determined on injection moulded dogbone specimens of 4 mm thickness prepared in accordance with EN ISO 1873-2. Tensile modulus was determined according to ISO 527-1A at a strain rate of 1 mm/min and 23°C, 80 °C and 120 °C., stress at yield was determined at a strain rate of 50 mm/min and 23°C, 80 °C and 120 °C.

**The branching index g'**

The relative amount of branching is determined using the g'-index of the branched polymer sample. The long chain branching (LCB) index is defined as g'= $[\eta]_{br}/[\eta]_{lin}$. It is well known if the g' value increases the branching content decreases. $[\eta]$ is the intrinsic viscosity at 160 °C in TCB of the polymer sample at a certain molecular weight and is measured by an online viscosity and a concentration detector. The intrinsic viscosities were measured as described in the handbook of the Cirrus Multi-Offline SEC-Software Version 3.2 with use of the Solomon-Gatesman equation.

The necessary concentration of each elution slice is determined by a RI detector.

$[q]_{lin}$ is the intrinsic viscosity of a linear sample and $[\eta]_{br}$ the viscosity of a branched sample of the same molecular weight and chemical composition. The number average of $g'_n$ and the weight average $g'_w$ are defined as:

$$g'_n = \frac{\sum_0^i a_i * \dfrac{[\eta]_{br,i}}{[\eta]_{lin,i}}}{\sum a_i}$$

Where $a_i$ is dW/dlogM of fraction i and $A_i$ is the cumulative dW/dlogM of the polymer up to fraction i. The $[\eta]_{lin}$ of the linear reference (linear isotactic PP) over the molecular weight was measured with an online viscosity detector. Following K and $\alpha$ values were obtained (K = 30.68*10$^{-3}$ and $\alpha$ = 0.681) from the linear reference in the molecular weight range of logM = 4.5-6.1. The $[\eta]_{lin}$ per slice molecular weight for the g' calculations was calculated by following relationship $[\eta]_{lin,i}$=K*Mi$^\alpha$. $[\eta]_{br,i}$ was measured for each particular sample by online viscosity and concentration detector.

qpcBR index:

The gpcBR index is calculated by using the following formula:

$$gpc_{BR} = \left[ \left( \frac{[\eta]_{lin}}{[\eta]\ (bulk)} \right) \right] \cdot \left[ \frac{M_w(LS15)}{M_{w,lin}} \right]^\alpha - 1$$

Where the Mw (LS15) is calculated from the light scattering elution area of 15° angle and $[\eta]$ (bulk) from the corresponded viscosity detector elution area by using the Cirrus Multi-Offline SEC-Software Version 3.2 and the following

approach.

$$M_w(LS15) = \frac{K_{LS} \cdot Area_{LS15-det}}{\frac{dn}{dc} \cdot Area_{RI-det}}$$

$$[\eta](bulk) = K_{IV} \cdot \frac{\sum nSp_i}{C} \,(dl/g)$$

Where $K_{LS}$ is the light scattering constant of 15° angle, dn/dc is the refractive index increment as calculated from the detector constant of the RI detector, $K_{IV}$ is the detector constant of the viscometer, $Sp_i$ is the specific viscosity at each chromatographic slice and C is the corresponded concentration in g/dl.

## $F_{30}$ and melt strength and $v_{30}$ and melt extensibility

The test described herein follows ISO 16790:2005. The strain hardening behaviour is determined by the method as described in the article "Rheotens-Mastercurves and Drawability of Polymer Melts", M. H. Wagner, Polymer Engineering and Science, Vol. 36, pages 925 to 935. The strain hardening behaviour of polymers is analysed by Rheotens apparatus (product of Göttfert, Siemensstr.2, 74711 Buchen, Germany) in which a melt strand is elongated by drawing down with a defined acceleration.

The Rheotens experiment simulates industrial spinning and extrusion processes. In principle a melt is pressed or extruded through a round die and the resulting strand is hauled off. The stress on the extrudate is recorded, as a function of melt properties and measuring parameters (especially the ratio between output and haul-off speed, practically a measure for the extension rate). For the results presented below, the materials were extruded with a lab extruder HAAKE Polylab system and a gear pump with cylindrical die (L/D = 6.0/2.0 mm). For measuring $F_{30}$ melt strength and $v_{30}$ melt extensibility, the pressure at the extruder exit (= gear pump entry) is set to 30 bars by by-passing a part of the extruded polymer.

The gear pump was pre-adjusted to a strand extrusion rate of 5 mm/s, and the melt temperature was set to 200°C. The spinline length between die and Rheotens wheels was 80 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions. The acceleration of the melt strand drawn down is 120 mm/sec$^2$. The Rheotens was operated in combination with the PC program EXTENS. This is a real-time data-acquisition program, which displays and stores the measured data of tensile force and drawdown speed. The end points of the Rheotens curve (force versus pulley rotary speed), where the polymer strand ruptures, are taken as the $F_{30}$ melt strength and $v_{30}$ melt extensibilty values.

**UL94 Vertical burning test** was performed according to UL 94: 2016. The samples are injection moulded in pieces 125±5 mm length, 13.0±0.5 mm width and a thickness of 0.025-13mm. Under pretreatment condition I, the samples must be conditioned in a constant room temperature of 23±2 °C and 50±10% humidity for 48 hours. Under pretreatment condition II, the samples must be conditioned in an air-circulating oven for 168 hours at 70 ± 1°C and then cooled in the desiccator for at least 4 hours at room temperature, prior to testing. Testing must take place within 30 minutes of the samples being taken from the conditioning. The sample is hanged vertically in the test chamber and subjected to a first ignition for 10 sec, then a second ignition for another 10 sec. The burning time after each ignition is recorded and it is also noted if there is afterglow, burning dripping that ignites the cotton in the bottom of the chamber and if there is flames or glow up to holding clamp. Classifications are V-0, V-1, V-2 or no classification, and the classification is dependent on the thickness of the test object.

## Dripping test

This method is intended to determine how different formulations drops, when they burn. A metal grid with a size of 8 meshes and diameter of 150 mm is used. Each polymer composition test plate is pressed into 3.0 mm thickness and cut to an area of 65×65 mm. Before testing, the sample is conditioned at 23° C. for at least 16 hours at 50% relative humidity. The test is then carried out in a fume cupboard. The temperature in the fume cupboard shall be (23±10)° C. Calibration of a flow-meter is performed when changing the gas bottle. The recorder is calibrated and the flow on the flow-meter is set to Butane: 650+-30 ml/min (23° C., 100 kPa). The plate is placed in the middle of a net. A burner is lighted with a stable flame of approximately 130 mm with an inner blue flame of approximately 50 mm. The burner is placed at a 45 degree angle inclined towards the centre of the sample and that the tip of the inner blue flame hits the centre of the surface of the test object. The burner is kept in this position during the entire text execution. The test time varies greatly depending on the flammability of the material. When the sample is stops burning the burner is removed. At least three tests per sample are performed. The drops are collected in a water bath at the bottom. The water is dried away and the drops are weighted. The weight of the dried droplet remains is divided by the original mass (m/m) and calculated as weight % of the original mass. The test is a comparable test and can divide to comparable materials.

## 2. Examples

### The propylene polymer (PP)

### Catalyst preparation

The catalyst for the preparation of PP was prepared as follows:

3,4 litre of 2-ethylhexanol and 810 mL of propylene glycol butyl monoether (in a molar ratio 4/1) were added to a 20 L reactor. Then 7.8 litre of a 20 % solution in toluene of BEM (butyl ethyl magnesium) provided by Crompton GmbH were slowly added to the well stirred alcohol mixture. During the addition the temperature was kept at 10 °C. After addition the temperature of the reaction mixture was raised to 60 °C and mixing was continued at this temperature for 30 minutes. Finally after cooling to room temperature the obtained Mg-alkoxide was transferred to storage vessel. 21.2 g of Mg alkoxide prepared above was mixed with 4.0 mL bis(2-ethylhexyl) citraconate for 5 min. After mixing the obtained Mg complex was used immediately in the preparation of catalyst component. 19.5 mL titanium tetrachloride was placed in a 300 mL reactor equipped with a mechanical stirrer at 25°C. Mixing speed was adjusted to 170 rpm. 26.0 of Mg-complex prepared above was added within 30 minutes keeping the temperature at 25 °C .3.0 mL of Viscoplex 1-254 and 1.0 mL of a toluene solution with 2 mg Necadd 447 was added. Then 24.0 mL of heptane was added to form an emulsion. Mixing was continued for 30 minutes at 25 °C. Then the reactor temperature was raised to 90°C within 30 minutes. The reaction mixture was stirred for further 30 minutes at 90°C. Afterwards stirring was stopped and the reaction mixture was allowed to settle for 15 minutes at 90°C.

The solid material was washed 5 times: Washings were made at 80 °C under stirring 30 min with 170 rpm. After stirring was stopped the reaction mixture was allowed to settle for 20-30 minutes and followed by siphoning.

Wash 1: Washing was made with a mixture of 100 ml of toluene and 1 mL donor

Wash 2: Washing was made with a mixture of 30 ml of $TiCl_4$ and 1 mL of donor.

Wash 3: Washing was made with 100 mL toluene.

Wash 4: Washing was made with 60 mL of heptane.

Wash 5. Washing was made with 60 mL of heptane under 10 minutes stirring.

Afterwards stirring was stopped and the reaction mixture was allowed to settle for 10 minutes decreasing the temperature to 70°C with subsequent siphoning, and followed by $N_2$ sparging for 20 minutes to yield an air sensitive powder.

VCH modification of the catalyst

35 mL of mineral oil (Paraffinum Liquidum PL68) was added to a 125 mL stainless steel reactor followed by 0.82 g of triethyl aluminium (TEAL) and 0.33 g of dicyclopentyl dimethoxy silane (donor D) under inert conditions at room temperature. After 10 minutes 5.0 g of the catalyst prepared in 1a (Ti content 1,4 wt.-%) was added and after additionally 20 minutes 5.0 g of vinylcyclohexane (VCH) was added.).The temperature was increased to 60 °C during 30 minutes and was kept there for 20 hours. Finally, the temperature was decreased to 20 °C and the concentration of unreacted VCH in the oil/catalyst mixture was analyzed and was found to be 120 ppm weight.

The process for the preparation of the propylene polymer (PP) being a heterophasic propylene copolymer is summarized in Table 1.

**Table 1:** Preparation of the propylene polymer (PP)

|  |  | PP |
| --- | --- | --- |
| **Prepolymerization** |  |  |
| Co/Donor | [mol/mol] | 20 |
| Co/Ti | [mol/mol] | 250 |
| Temperature | [°C] | 21 |
| Residence time | [min] | 20 |

(continued)

| Loop (R1) | | |
|---|---|---|
| Temperature | [°C] | 80 |
| Split | [wt.-%] | 51 |
| H2/C3 | [mol/kmol] | 6.40 |
| MFR | [g/10min] | 42 |
| **GPR1 (R2)** | | |
| Temperature | [°C] | 80 |
| Split | [wt.-%] | 30 |
| H2/C3 | [mol/kmol] | 69.3 |
| MFR | [g/10min] | 42 |
| XCS | [wt.-%] | 2.0 |
| **GPR2 (R3)** | | |
| Temperature | [°C] | 80 |
| C2/C3 | [mol/kmol] | 399 |
| H2/C2 | [mol/kmol] | 84 |
| Split | [wt.-%] | 19 |
| MFR | [g/10min] | 19.0 |
| **Final** | | |
| XCS | [wt.-%] | 17.5 |
| C2(total) | [mol-%] | 7.5 |
| C2(XCS) | [mol-%] | 43.6 |
| IV(XCS) | [dL/g] | 2.6 |
| MFR | [g/10min] | 20 |
| Tm | [°C] | 166 |
| Tc | [°C] | 130 |
| density | [kg/m$^3$] | 905 |

**Preparation of the polypropylene composition (C)**

The propylene polymer PP was melt blended on a co-rotating twin screw extruder with the flame retardant composition (FR) and the antidripping-agent (A) in amounts as indicated in Table 2 below.

Table 2: Composition and properties of the comparative and inventive examples

| | | CE1 | IE1 | IE2 |
|---|---|---|---|---|
| **PP** | [wt.-%] | 66.7 | 37.0 | 47.0 |
| **FR** | [wt.-%] | 25.0 | 25.0 | 25.0 |
| **HMS-PP** | [wt.-%] | | 30.0 | 20.0 |
| **PTFE** | [wt.-%] | 0.3 | | |
| **CB (40%)** | [wt.-%] | 8.0 | 8.0 | 8.0 |
| | | | | |
| **MFR** | [g/10min] | 8.1 | 6.3 | 8.3 |
| **NIS** | [kJ/m$^2$] | 3.1 | 2.8 | 2.6 |

(continued)

|  |  | CE1 | IE1 | IE2 |
|---|---|---|---|---|
| **UL 94 (1.6 mm)** | [-] | V0[1] | V0[1] | V0[1] |
| **TM** | [MPa] | 1820 | 2040 | 1830 |
| [1] After pretreatment condition I of the UL 94 test |  |  |  |  |

**FR**      is the commercial flame retardant composition Phlamoon-1090A of SULI comprising 55 to 60 wt.-% melamine polyphosphate and 40 to 55 wt.-% piperazine pyrophosphate.

**HMS-PP**      is the commercial long-chain branched polypropylene WB140HMS of Borealis having a melt flow rate $MFR_2$ (230 °C, 2.16 kg) of 2.1 g/10 min, a $F_{30}$ melt strength of 36 cN and a $v_{30}$ melt extensibility of 230 mm/sec.

**PTFE CB**      is the commercial PTFE DYNEON TF 2025 Z PTFE (3M) is the commercial carbon black masterbatch CBMB-LD-09-A02 (40% carbon black in PE)

As can be gathered from Table 2, the inventive compositions comprising HMS-PP instead of PTFE as an antidripping agent are rated V0 whereupon the occurrence of dripping phenomena is on a low level.

**Claims**

1. Flame retardant polypropylene composition (C), comprising

    i) 23.0 to 80.0 wt.-% of a propylene polymer (PP),
    ii) 10.0 to 40.0 wt.-% of a nitrogen-containing flame retardant (FR), and
    iii) 10.0 to 37.0 wt.-% of an antidripping-agent (A) being a high melt strength polypropylene (HMS-PP) having a $F_{30}$ melt strength determined according to ISO 16790:2005 of at least 20 cN, and
    iv) 0.0 to 15.0 wt.-% of carbon black (CB),
    based on the overall weight of the flame retardant polypropylene composition (C),
    wherein the flame retardant polypropylene composition (C) does not contain glass fibers.

2. Flame retardant polypropylene composition (C) according to claim 1, wherein the propylene polymer (PP) is a heterophasic propylene copolymer (HECO) comprising

    a) a matrix (M) being a polymer of propylene, and
    b) an elastomer (E) being a copolymer comprising units derived from propylene and ethylene and/or $C_4$ to $C_8$ a-olefin.

3. Flame retardant polypropylene composition (C) according to claim 1 or claim 2,
    wherein the flame retardant polypropylene composition (C) is free of halogens.

4. Flame retardant polypropylene composition (C) according to any one of the preceding claims, wherein the overall amounts of the propylene polymer (PP), the nitrogen-containing flame retardant (FR), the antidripping-agent (A) and optionally the carbon black (CB) together make up at least 90 wt.-% of the flame retardant polypropylene composition (C), preferably sum up to 100 wt.-%.

5. Flame retardant polypropylene composition (C) according to any one of the preceding claims, wherein the nitrogen-containing flame retardant (FR) comprises a first nitrogen-containing phosphate (FR1) and a second nitrogen-containing phosphate (FR2).

6. Flame retardant polypropylene composition (C) according to claim 5, wherein the weight ratio between the first nitrogen-containing phosphate (FR1) and the second nitrogen-containing phosphate (FR2) is in the range of 60:40 to 40:60.

7. Flame retardant polypropylene composition (C) according to claim 5 or 6, wherein the first nitrogen-containing phosphate (FR1) is melamine polyphosphate and the second nitrogen-containing phosphate (FR2) is piperazine pyrophosphate.

8. Flame retardant polypropylene composition (C) according to any one of claims 2 to 7, wherein the heterophasic propylene copolymer (HECO) has a comonomer content in the range of 4.0 to 17.0 mol-%, preferably in the range of 6.0 to 10.0 mol-%.

9. Flame retardant polypropylene composition according to any one of claims 2 to 8, wherein the heterophasic propylene copolymer (HECO) has a xylene cold soluble fraction (XCS) in the range of 7.0 to 25.0 wt.-%, preferably in the range of 11.0 to 22.0 wt.-%, based on the overall weight of the heterophasic propylene copolymer (HECO).

10. Flame retardant polypropylene composition (C) according to claim 9 wherein the xylene soluble fraction (XCS) of the heterophasic propylene copolymer (HECO) has a comonomer content in the range of 25.0 to 65.0 mol-%, preferably in the range of 40.0 to 45.0 mol-%.

11. Flame retardant polypropylene composition (C) according to claim 9 or claim 10 wherein the xylene soluble fraction (XCS) of the heterophasic propylene copolymer (HECO) has an intrinsic viscosity (IV) measured according to ISO 1628/1 (at 135 °C in decalin) below 3.5 dl/g, preferably in the range of 2.4 to 3.4 dl/g

12. Flame retardant polypropylene composition (C) according to any one of the preceding claims wherein the high melt strength polypropylene (HMS-PP) has a melt flow rate $MFR_2$ (230 °C, 2.16 kg) determined according to ISO 1133 in the range of 0.5 to 15.0 g/10 min.

13. Flame retardant polypropylene composition (C) according to any one of the preceding claims, having a melt flow rate $MFR_2$ (230 °C, 2.16 kg) determined according to ISO 1133 in the range of 1.0 to 30.0 g/10 min.

14. Use of a high melt strength polypropylene (HMS-PP) having a $F_{30}$ melt strength determined according to ISO 16790:2005 of at least 20 cN as an antidripping agent (A) for a composition according to claim 1.

15. Use of a high melt strength polypropylene (HMS-PP) having a $F_{30}$ melt strength determined according to ISO 16790:2005 of at least 20 cN as an antidripping agent (A) for a composition comprising a propylene polymer (PP) and a nitrogen-containing flame retardant (FR), wherein said propylene polymer (PP) is a heterophasic propylene copolymer (HECO) comprising a matrix (M) being a polymer of propylene, and an elastomer (E) being a copolymer comprising units derived from propylene and ethylene and/or $C_4$ to $C_8$ a-olefin.

16. Article, comprising the flame retardant polypropylene composition (C) according to any one of claims 1 to 13.

**Patentansprüche**

1. Flammhemmende Polypropylenzusammensetzung (C), umfassend

i) 23,0 bis 80,0 Gew.-% eines Propylenpolymers (PP),
ii) 10,0 bis 40,0 Gew.-% eines stickstoffhaltigen Flammschutzmittels (FR), und
iii) 10,0 bis 37,0 Gew.-% eines Antidrippingmittels (A), bei dem es sich um ein hochschmelzfestes Polypropylen (HMS-PP) mit einer nach ISO 16790:2005 bestimmten $F_{30}$-Schmelzfestigkeit von mindestens 20 cN handelt, und
iv) 0,0 bis 15,0 Gew.-% Ruß (CB),

bezogen auf das Gesamtgewicht der flammhemmenden Polypropylenzusammensetzung (C), wobei die flammhemmende Polypropylenzusammensetzung (C) keine Glasfasern enthält.

2. Flammhemmende Polypropylenzusammensetzung (C) gemäß Anspruch 1, wobei das Propylenpolymer (PP) ein heterophasisches Propylencopolymer (HECO) ist, umfassend

a) eine Matrix (M), die ein Polymer von Propylen ist, und
b) ein Elastomer (E), das ein Copolymer ist, das von Propylen und Ethylen und/oder $C_4$ bis $C_8$ $\alpha$-Olefin abgeleitete Einheiten umfasst.

3. Flammhemmende Polypropylenzusammensetzung (C) gemäß Anspruch 1 oder Anspruch 2, wobei die flammhemmende Polypropylenzusammensetzung (C) frei von Halogenen ist.

4. Flammhemmende Polypropylenzusammensetzung (C) gemäß einem der vorhergehenden Ansprüche, wobei die Gesamtmengen des Propylenpolymers (PP), des stickstoffhaltigen Flammschutzmittels (FR), des Antidrippingmittels (A) und gegebenenfalls des Rußes (CB) zusammen mindestens 90 Gew.-% der flammhemmenden Polypropylenzusammensetzung (C) ausmachen, vorzugsweise bis zu 100 Gew.-%.

5. Flammhemmende Polypropylenzusammensetzung (C) gemäß einem der vorhergehenden Ansprüche, wobei das stickstoffhaltige Flammschutzmittel (FR) ein erstes stickstoffhaltiges Phosphat (FR1) und ein zweites stickstoffhaltiges Phosphat (FR2) umfasst.

6. Flammhemmende Polypropylenzusammensetzung (C) gemäß Anspruch 5, wobei das Gewichtsverhältnis zwischen dem ersten stickstoffhaltigen Phosphat (FR1) und dem zweiten stickstoffhaltigen Phosphat (FR2) im Bereich von 60:40 bis 40:60 liegt.

7. Flammhemmende Polypropylenzusammensetzung (C) gemäß Anspruch 5 oder 6, wobei das erste stickstoffhaltige Phosphat (FR1) Melaminpolyphosphat ist und das zweite stickstoffhaltige Phosphat (FR2) Piperazinpyrophosphat ist.

8. Flammhemmende Polypropylenzusammensetzung (C) gemäß einem der Ansprüche 2 bis 7, wobei das heterophasige Propylencopolymer (HECO) einen Comonomergehalt im Bereich von 4,0 bis 17,0 Mol-%, vorzugsweise im Bereich von 6,0 bis 10,0 Mol-%, aufweist.

9. Flammhemmende Polypropylenzusammensetzung gemäß einem der Ansprüche 2 bis 8, wobei das heterophasische Propylencopolymer (HECO) eine in Xylol kalt lösliche Fraktion (XCS) im Bereich von 7,0 bis 25,0 Gew.-%, vorzugsweise im Bereich von 11,0 bis 22,0 Gew.-%, bezogen auf das Gesamtgewicht des heterophasischen Propylencopolymers (HECO), aufweist.

10. Flammhemmende Polypropylenzusammensetzung (C) gemäß Anspruch 9, wobei die xylollösliche Fraktion (XCS) des heterophasischen Propylencopolymers (HECO) einen Comonomergehalt im Bereich von 25,0 bis 65,0 Mol-%, vorzugsweise im Bereich von 40,0 bis 45,0 Mol-%, aufweist.

11. Flammhemmende Polypropylenzusammensetzung (C) gemäß Anspruch 9 oder Anspruch 10, wobei die in Xylol lösliche Fraktion (XCS) des heterophasischen Propylencopolymers (HECO) eine nach ISO 1628/1 (bei 135 °C in Decalin) gemessene Grenzviskosität (IV) unter 3,5 dl/g, vorzugsweise im Bereich von 2,4 bis 3,4 dl/g, aufweist.

12. Flammhemmende Polypropylenzusammensetzung (C) gemäß einem der vorhergehenden Ansprüche, wobei das hochschmelzfeste Polypropylen (HMS-PP) eine Schmelzflussrate $MFR_2$ (230 °C, 2,16 kg), bestimmt nach ISO 1133, im Bereich von 0,5 bis 15,0 g/10 min aufweist.

13. Flammhemmende Polypropylenzusammensetzung (C) gemäß einem der vorhergehenden Ansprüche mit einer Schmelzflussrate $MFR_2$ (230 °C, 2,16 kg), bestimmt nach ISO 1133, im Bereich von 1,0 bis 30,0 g/10 min.

14. Verwendung eines hochschmelzfesten Polypropylens (HMS-PP) mit einer Schmelzfestigkeit $F_{30}$, bestimmt nach ISO 16790:2005, von mindestens 20 cN als Antitropfmittel (A) für eine Zusammensetzung nach Anspruch 1.

15. Verwendung eines hochschmelzfesten Polypropylens (HMS-PP) mit einer $F_{30}$-Schmelzfestigkeit, bestimmt nach ISO 16790:2005 von mindestens 20 cN als Antitropfmittel (A) für eine Zusammensetzung, die ein Propylenpolymer (PP) und ein stickstoffhaltiges Flammschutzmittel (FR) umfasst, wobei das Propylenpolymer (PP) ein heterophasisches Propylencopolymer (HECO) ist, das eine Matrix (M), die ein Polymer von Propylen ist, und ein Elastomer (E) umfasst, das ein Copolymer ist, das Einheiten umfasst, die von Propylen und Ethylen und/oder $C_4$ bis $C_8$ $\alpha$-Olefin abgeleitet sind.

16. Gegenstand, umfassend die flammhemmende Polypropylenzusammensetzung (C) nach einem der Ansprüche 1 bis 13.

**Revendications**

1. Composition de polypropylène ignifuge (C), comprenant

   i) 23,0 à 80,0 % en poids d'un polymère de propylène (PP),
   ii) 10,0 à 40,0 % en poids d'un agent ignifuge (FR) contenant de l'azote, et
   iii) 10,0 à 37,0 % en poids d'un agent antigoutte (A) qui est un polypropylène à haute résistance à la fusion (HMS-PP) ayant une résistance à la fusion $F_{30}$ déterminée selon la norme ISO 16790:2005 d'au moins 20 cN, et
   iv) 0,0 à 15,0 % en poids de noir de carbone (CB),

   sur la base du poids total de la composition de polypropylène ignifuge (C), dans laquelle la composition de polypropylène ignifuge (C) ne contient pas de fibres de verre.

2. Composition de polypropylène ignifuge (C) selon la revendication 1, dans laquelle le polymère de propylène (PP) est un copolymère de propylène hétérophasique (HECO) comprenant

   a) une matrice (M) qui est un polymère de propylène,
   et
   b) un élastomère (E) qui est un copolymère comprenant des motifs dérivés de propylène et d'éthylène et/ou de l'a-oléfine en $C_4$ à $C_8$.

3. Composition de polypropylène ignifuge (C) selon la revendication 1 ou la revendication 2, dans laquelle la composition de polypropylène ignifuge (C) est exempte d'halogènes.

4. Composition de polypropylène ignifuge (C) selon l'une des revendications précédentes, dans laquelle les quantités totales du polymère de propylène (PP), de l'agent ignifuge (FR) contenant de l'azote, de l'agent antigoutte (A) et facultativement du noir de carbone (CB) constituent ensemble au moins 90 % en poids de la composition de polypropylène ignifuge (C), de préférence jusqu'à 100 % en poids.

5. Composition de polypropylène ignifuge (C) selon l'une des revendications précédentes, dans laquelle l'agent ignifuge (FR) contenant de l'azote comprend un premier phosphate contenant de l'azote (FR1) et un second phosphate contenant de l'azote (FR2).

6. Composition de polypropylène ignifuge (C) selon la revendication 5, dans laquelle le rapport pondéral entre le premier phosphate contenant de l'azote (FR1) et le second phosphate contenant de l'azote (FR2) est dans la plage de 60:40 à 40:60.

7. Composition de polypropylène ignifuge (C) selon la revendication 5 ou 6, dans laquelle le premier phosphate contenant de l'azote (FR1) est du polyphosphate de mélamine et le second phosphate contenant de l'azote (FR2) est du pyrophosphate de pipérazine.

8. Composition de polypropylène ignifuge (C) selon l'une des revendications 2 à 7, dans laquelle le copolymère de propylène hétérophasique (HECO) a une teneur en comonomère dans la plage de 4,0 à 17,0 % en mol, de préférence dans la plage de 6,0 à 10,0 % en mol.

9. Composition de polypropylène ignifuge selon l'une des revendications 2 à 8, dans laquelle le copolymère de propylène hétérophasique (HECO) a une fraction soluble dans le xylène froid (XCS) dans la plage de 7,0 à 25,0 % en poids, de préférence dans la plage de 11,0 à 22,0 % en poids, sur la base du poids total du copolymère de propylène hétérophasique (HECO).

10. Composition de polypropylène ignifuge (C) selon la revendication 9 dans laquelle la fraction soluble dans le xylène (XCS) du copolymère de propylène hétérophasique (HECO) a une teneur en comonomère dans la plage de 25,0 à 65,0 % en mol, de préférence dans la plage de 40,0 à 45,0 % en mol.

11. Composition de polypropylène ignifuge (C) selon la revendication 9 ou la revendication 10 dans laquelle la fraction soluble dans le xylène (XCS) du copolymère de propylène hétérophasique (HECO) a une viscosité intrinsèque (IV) mesurée selon la norme ISO 1628/1 (à 135 °C dans décaline) en dessous de 3,5 dl/g, de préférence dans la plage de 2,4 à 3,4 dl/g.

**12.** Composition de polypropylène ignifuge (C) selon l'une des revendications précédentes, dans laquelle le polypropylène à haute résistance à la fusion (HMS-PP) présente un indice de fluidité $MFR_2$ (230 °C, 2,16 kg) déterminé selon la norme ISO 1133 dans la plage de 0,5 à 15,0 g/10 min.

**13.** Composition de polypropylène ignifuge (C) selon l'une des revendications précédentes, ayant un indice de fluidité $MFR_2$ (230 °C, 2,16 kg) déterminé selon la norme ISO 1133 dans la plage de 1,0 à 30,0 g/10 min.

**14.** Utilisation d'un polypropylène à haute résistance à la fusion (HMS-PP) ayant une résistance à la fusion $F_{30}$ déterminée selon la norme ISO 16790:2005 d'au moins 20 cN en tant qu'agent antigoutte (A) pour une composition selon la revendication 1.

**15.** Utilisation d'un polypropylène à haute résistance à la fusion (HMS-PP) ayant une résistance à la fusion $F_{30}$ déterminée selon la norme ISO 16790:2005 d'au moins 20 cN en tant qu'agent antigoutte (A) pour une composition comprenant un polymère de propylène (PP) et un agent ignifuge (FR) contenant de l'azote, dans laquelle ledit polymère de propylène (PP) est un copolymère de propylène hétérophasique (HECO) comprenant une matrice (M) qui est un polymère de propylène, et un élastomère (E) qui est un copolymère comprenant des motifs dérivés de propylène et d'éthylène et/ou de l'a-oléfine en $C_4$ à $C_8$.

**16.** Article comprenant la composition de polypropylène ignifuge (C) selon l'une des revendications 1 à 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1892264 A
- EP 0879830 A1
- EP 0787750 A
- EP 0890612 A2

### Non-patent literature cited in the description

- **Y. WANG et al.** *Journal of Fire Sciences*, 2012, vol. 30 (6), 477-501
- **HANS ZWEIFEL**. Plastic Additives Handbook. 2009, 1141-1190
- **SINGH, G.** ; **KOTHARI, A.** ; **GUPTA, V.** *Polymer Testing*, 2009, vol. 28 (5), 475
- **ZHOU, Z.** ; **KUEMMERLE, R.** ; **QIU, X.** ; **REDWINE, D.** ; **CONG, R.** ; **TAHA, A.** ; **BAUGH, D** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun*, 2007, vol. 28, 1128
- **CHENG, H. N.** *Macromolecules*, 1984, vol. 17, 1950
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromoleucles*, 1997, vol. 30, 6251
- **KAKUGO, M.** ; **NAITO, Y.** ; **MIZUNUMA, K.** ; **MIYATAKE, T**. *Macromolecules*, 1982, vol. 15, 1150
- **M. H. WAGNER**. Rheotens-Mastercurves and Drawability of Polymer Melts. *Polymer Engineering and Science*, vol. 36, 925-935